# EUROPÄISCHE PATENTSCHRIFT

(11) **EP 1 158 207 B1**
(45) Veröffentlichungstag und Bekanntmachung des Hinweises auf die Patenterteilung: **16.07.2003**
(21) Anmeldenummer: 01111556.5
(22) Anmeldetag: 11.05.2001
(51) Int. Cl.: F16H 25/18

(54) **Axialstelltrieb, insbesondere zur Variatorbetätigung, Variator sowie CVT-Getriebe**
Axial actuator for a variator ,variator and cvt.
REducteur de positionnement axial pour variateur. variateur et transmission a changement de vitesses continu.

(30) Priorität: 25.05.2000 DE 10025978
(43) Veröffentlichungstag der Anmeldung: 28.11.2001
(73) Patentinhaber: Torrington Nadellager GmbH, 33790 Halle Westf. (DE)
(72) Erfinder: Weissflog, Dietmar, Dipl.-Ing., 33378 Rheda-Wiedenbrück (DE)
(74) Vertreter: Fischer, Matthias, Dipl.-Ing.

(56) Entgegenhaltungen:
- EP-A- 0 060 320
- DE-C- 19 942 462
- FR-A- 800 260
- FR-A- 2 614 082
- FR-A- 2 701 526
- US-A- 3 638 763
- PATENT ABSTRACTS OF JAPAN vol. 008, no. 249 (M-338), 15. November 1984 (1984-11-15) & JP 59 126149 A (AISHIN WARNER KK), 20. Juli 1984 (1984-07-20)

## Beschreibung

Die vorliegende Erfindung betrifft einen Axialstelltrieb zur Umwandlung einer Drehbewegung in eine translatorische Bewegung, insbesondere für die Steuerung der Axialposition von Variatorscheiben eines stufenlosen Fahrzeuggetriebes (Continuously-Variable-Transmission- oder CVT-Getriebes), einen Variator sowie ein CVT-Getriebe selbst.

Ein gattungsgemäßer Axialstelltrieb unit den Merkmalen des Oberbegriffs des Anspruchs 1 ist bereits aus der JP 59 126149 A bekannt.

Aus der internationalen Patentanmeldung WO/00/03157 ist ein Axialstelltrieb bekannt mit wenigstens einem ersten Paar von wendelförmigen Bahnen, die sich entlang einer Zylindermantelfläche um eine Axialachse drehbar erstrecken, wobei zwischen dem ersten Paar von wendelförmigen Bahnen ein radial geführter Axialnadel oder -rollenkranz angeordnet ist, dessen Lauflänge im wesentlichen der Länge der Bahnen entspricht. In einer Variation dieser Ausführung ist ein zum ersten Paar von wendelförmigen Bahnen versetzt angeordnetes zweites Paar vorgesehen, um Querkräfte auszuschalten und eine möglichst hohe Kippstabilität zu erreichen. Für hohe bzw. sehr hohe zu übertragende Axialkräfte ist jedoch ein derart ausgebildeter Axialstelltrieb weniger geeignet.

Aus der nicht vorveröffentlichten deutschen Patentschrift DE 199 42 462 C1 ist ein Axialstelltrieb bekannt, mit einer Zwischenlage mit zwei wenigstens drei Paare gegeneinander beweglicher, wendelförmiger Lauf- oder Gleitbahnen aufweisenden Stellringen, die gekennzeichnet ist durch wenigstens drei wendelförmige miteinander verbundene, der Form der Lauf- oder Gleitbahnen folgende, die Friktion zwischen den Stellringen verringernde Abstandhalter, wobei eine Drehung des einen Stellringes eine Axialbewegung des anderen Stellringes bewirkt.

Es ist deshalb eine Aufgabe der vorliegenden Erfindung einen Axialstelltrieb für hohe und höchste Axialbelastungen vorzuschlagen, der auch noch mit wirtschaftlichem Energieeinsatz betrieben werden kann. Desweiteren stellt sich der Erfinder die Aufgabe, einen derartigen Axialstelltrieb, untergebracht in einem Variator eines CVT-Getriebes bzw. ein solches CVT-Getriebe selbst, vorzuschlagen.

Die Aufgabe wird gelöst mit einem Axialstelltrieb gemäß Anspruch 1.

Durch die erfindungsgemäße Gestaltung eines Axialstelltriebs mit wenigstens drei Rampen, die konzentrisch um eine Axialachse laufen, läßt sich eine sehr gleichmäßige und absolut kippstabile Anordnung schaffen. Ein zwischen den beiden zueinander komplementären Rampengruppen gesetzter, wendelförmige Flügel tragender, Flügelkäfig mit vorzugsweise im mittleren Bereich der wendelförmigen Flügel angeordneten Wälzkörpern ermöglicht eine absolut zuverlässige und wiederholbare Betätigung des Axialstelltriebs. Dies gilt insbesondere für hohe Axialkräfte, da sich eine, im Gegensatz zu aus dem Stand der Technik bekannten Axialstelltrieben, große Übertragungsfläche für Axialkräfte ergibt, ohne daß die Flächenpressung zu hoch wird.

In einer vorteilhaften Weiterbildung der Erfindung ist gemäß Anspruch 2 der Axialstelltrieb mit einer Antriebseinrichtung für das drehbare Steuerelement ausgebildet. Die hier gefundene Gestaltung der Antriebseinrichtung als Mehrkammerpumpe erhöht den Wirkungsgrad des Axialstelltriebs in vorteilhafter Weise bei einer sehr raumsparenden kleinen Pumpe, die bei kleinem Öldruck mit geringer Ölmenge arbeiten kann. Außerdem ist hierdurch bei kurzer Reaktionszeit eine sanfte stoß- und ruckfrei, und dabei fein definierbare Zustellung des Hubelements möglich. Anspruch 3 beschreibt einen Variator für ein CVT-Getriebe mit axial verstellbarer Variatorscheibe, aufgesetzt auf eine Welle, mit Drucköllängsbohrungen, die über Stichbohrungen einen Ringspalt versorgen, von dem ausgehend wiederum Stichbohrungen in Druckkammern der Antriebseinrichtung münden. Diese Ausgestaltung zeigt eine sehr elegante Energieversorgung der Antriebseinrichtung bzw. ihrer Kammern, die auf engstem Raum mit sehr geringem Teileaufwand erreicht werden kann.

Die in den Ansprüchen 4 und 5 beschriebenen vorteilhaften Weiterbildungen eines erfindungsgemäßen Variators betreffen die axial verschiebliche Anordnung der Variatorscheibe auf der Welle über eine Keilwellenverzahnung bzw. eine Kreuzrollenlagerung. Abhängig von den jeweiligen Einsatzzielen ist die eine oder die andere Ausbildung zu bevorzugen, wobei man unterscheidet, ob eine Gleit- oder eine Rollreibungsvariante im jeweiligen Einsatzfall die günstigere ist.

In einer vorteilhaften Ausgestaltung der Erfindung wird der beanspruchte Axialstelltrieb, untergebracht in einem Variator, in doppelter Anzahl eingesetzt zum Betrieb eines CVT-Getriebes gemäß Anspruch 6. Hierbei wird u.a. durch Beaufschlagung des abtriebsseitigen Variators mit einer Drehfeder, die die Losscheibe gegen die Festscheibe des Variators drückt erreicht, daß im Moment eines Energieabfalls auf der Antriebsseite die Losscheibe der Abtriebsseite federgesteuert in die vorderste Position gebracht wird.

Weitere Vorteile und Merkmale der erfindungsgemäßen Ausgestaltungen sind der folgenden Beschreibung zu entnehmen, in der ein Ausführungsbeispiel der Erfindung anhand von Zeichnungen zum besseren Verständnis der Erfindung kurz skizziert wird.
- Figur 1: zeigt in einer Schnittdarstellung zwei zueinander orientierte Variatoren eines CVT-Getriebes, in denen jeweils ein erfindungsgemäßer Axialstelltrieb unter- gebracht ist.
- Figur 2: zeigt etwas vergrößert im Schnitt den antriebsseitigen (oberen) Variator nach Figur 1.
- Figur 3: zeigt etwas vergrößert im Schnitt den abtriebsseitigen (unteren) Variator nach Figur 1.
- Figur 4: zeigt einen Variator ähnlich dem von Figur 3, wobei hier jedoch statt einer Keilwellenverzahnung zwischen Welle und Losscheibe einen sogenannte Kreuzrollenlagerung verwendet wurde.
- Figur 5: zeigt einen Schnitt durch den antriebsseitigen Variator, gesehen gemäß Rich- tungspfeil C von Figur 1.
- Figur 6: zeigt einen Schnitt durch den abtriebsseitigen Variator, gesehen gemäß Rich- tungspfeil C von Figur 1.
- Figur 6a: zeigt eine der Darstellung von Figur 6 identische Darstellung mit der Aus- nahme, daß anstatt eines Keilwellenprofils eine Kreuzrollenlagerung skizziert ist (siehe hierzu Figur 4).
- Figur 7: zeigt einen Schnitt durch die antriebsseitige Variatoranordnung in Blickrich- tung des Pfeils B von Figur 1.
- Figur 8: zeigt einen Schnitt durch die abtriebsseitige Variatoranordnung in Blickrich- tung des Pfeils B von Figur 1.
- Figur 9: zeigt eine Schnittansicht durch den antriebsseitigen Variator, insbesondere durch die Druckkammern der Antriebseinrichtung gemäß Pfeil D nach Figur 1.
- Figur 10: zeigt einen Schnitt durch den abtriebsseitigen Variator gemäß Blickrichtung D von Figur 1.
- Figur 11: zeigt, ähnlich wie Figur 1, die Variatoren eines CVT-Getriebes, jedoch hier nicht geschnitten, sondern gekapselt dargestellt jeweils mit maximal zurückge- fahrenen Losscheiben.

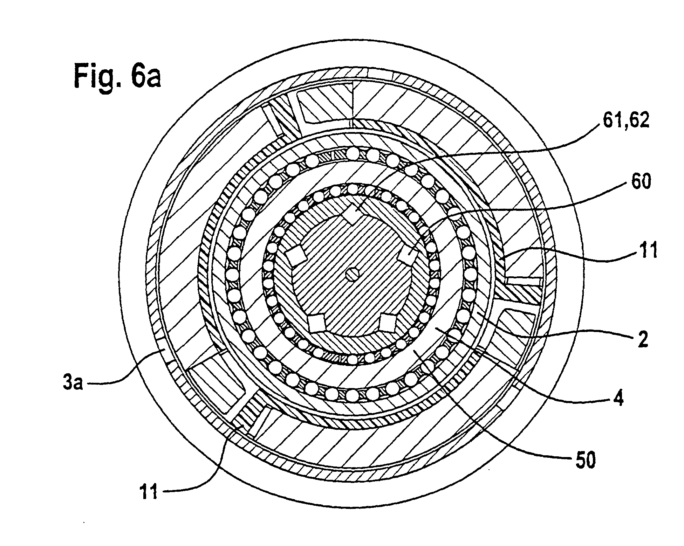

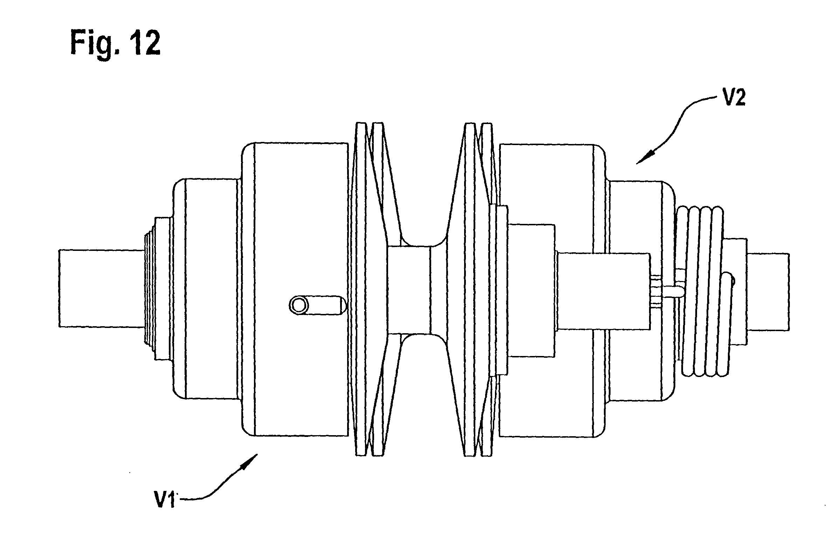

- Figur 12: zeigt die Anordnung der beiden Variatoren eines CVT-Getriebes gemäß Figur 1, gesehen in Blickrichtung E nach Figur 11.
- Figur 13: zeigt schematisch einen Teil der Bauteile des Variators V1 ohne Gehäuse.
- Figur 14: zeigt schematisch einen Wälzkörper für eine Kreuzrollenlagerung.
- Figur 15: zeigt schematisch einen weiteren Wälzkörper für eine Kreuzrollenlagerung.

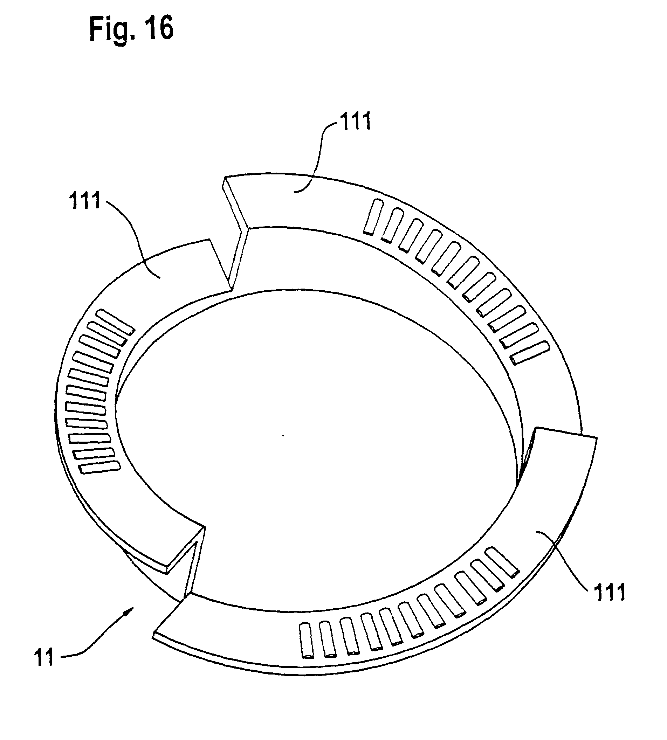

- Figur 16: zeigt schematisch eine perspektivische Darstellung eines Flügelkäfigs.

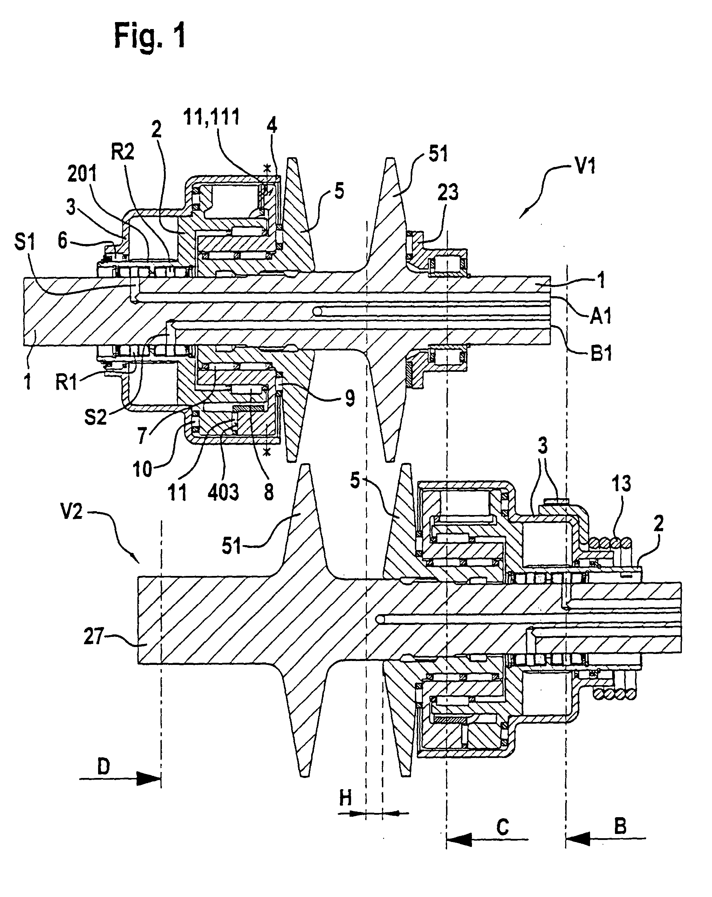

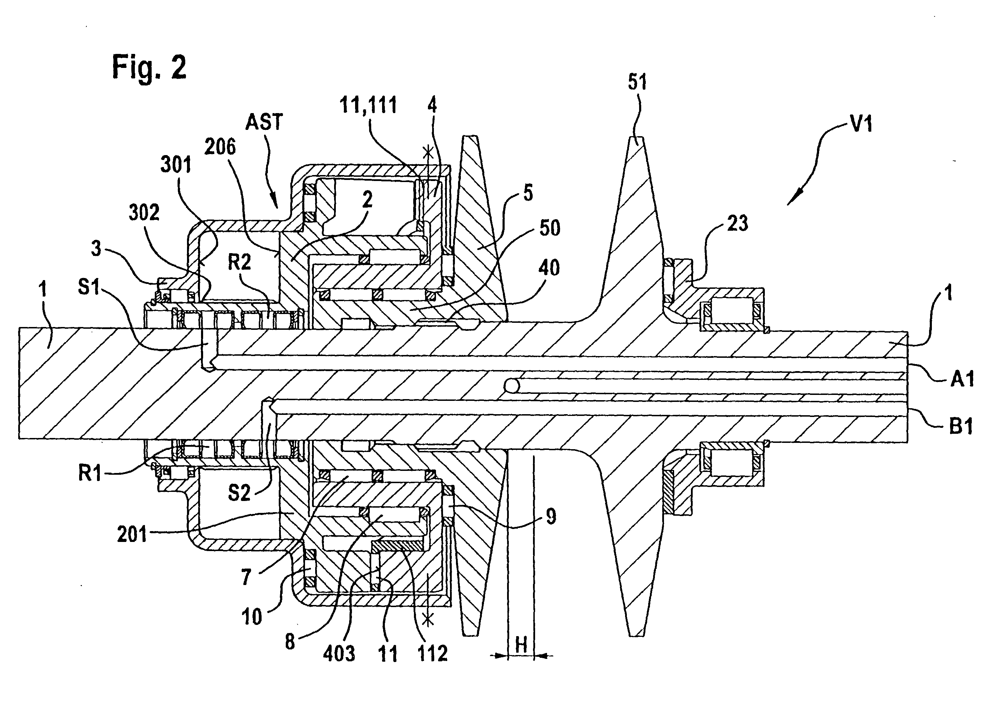

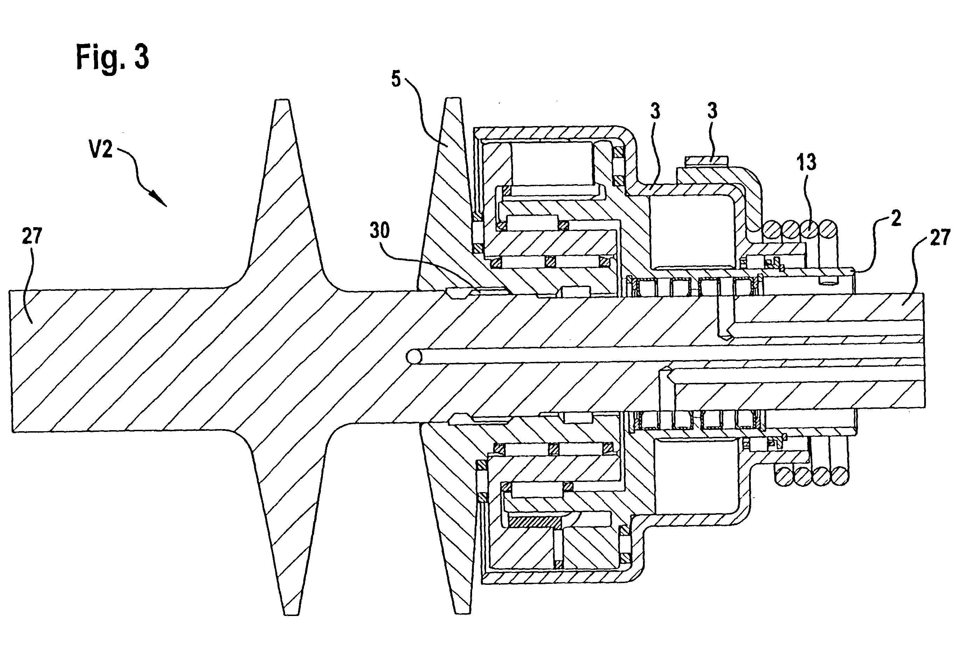

Figur 1 zeigt zwei Variatoren V1 und V2, die in Einbaustellung zueinander angeordnet dargestellt sind. (Technisch gleiche oder analoge Bauteile der beiden Variatoren V1 und V2 werden zur Vereinfachung der Beschreibung mit gleichen Bezugszeichen belegt). Der antriebsseitige Variator V1 ist im oberen Teil der Figur 1 und Figur 2 dargestellt. Der abtriebsseitige Variator V2 ist dem unteren Teil der Figur 1 und Figur 3 zu entnehmen. Eine in Figur 2 waagrecht liegende Welle 1 ist hier einstückig ausgebildet mit einer Variatorscheibe 51, die einer ihr. links gegenüberliegenden Variatorscheibe 5 (Losscheibe) gegenüberliegt. Der Variator V1 ist über eine Lagerung 23 und ein Gehäuse 3 im selben (nicht gezeigten) Getriebegehäuse axial und radial gelagert. Dasselbe gilt für Variator V2, wobei die Bauteile 3 und 23 aus Gründen der besseren Übersicht in den Figuren teilweise weggelassen wurden.

An dieser Stelle sei bemerkt, daß davon ausgegangen wird, daß CVT-Getriebe aus der Literatur, insbesondere aus einem Aufsatz von Dr.-Ing. Hartmut Faust und Dr.-Ing. André Linnenbrücker "CVT-Entwicklung bei LuK" bekannt ist:

Aus diesem Grund sollen Einzelheiten und Details bzw. die Technologie von CVT-Getrieben hier nicht wiederholt werden. Es sei hier auch noch auf drei weitere Literaturangaben hingewiesen:
(1) Dr. techn. R. Fischer, Dipl.-Ing. D. Otto:
   Wandlerüberbrückungssysteme; 4. internationales LuK-Kolloquium 1994, "Leichter Schalten umweltfreundlicher und komfortabler Fahren", Seiten 133 ff.
(2) Dr. techn. R. Fischer:
   Das TorCon-System - Ein neues Wandlerüberbrückungs-Konzept als Beitrag zur Ökonomie und Fahrfreude: VDI Berichte Nr. 1175, "Getriebe in Fahrzeugen 1995", Seiten 301 ff.
(3) Dave Piper:
   Automatic Transmissions - An American Perspective; VDI Berichte Nr. 1175, "Getriebe in Fahrzeugen 1995", Seiten 25 ff.

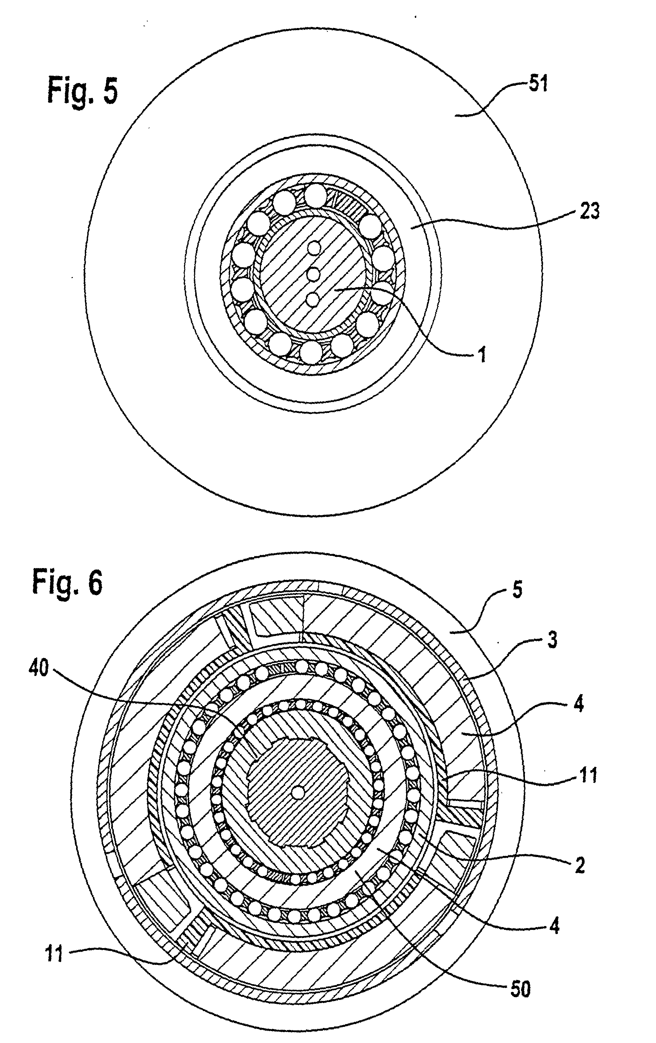

Über ein Radial-/Axiallager 23, das, an einem (nicht gezeigten) Getriebegehäuse raumfest angebracht, die Festscheibe 51 sowie die Welle 1 nach links abstützt, wird die über die Losscheibe 5 und eine zwischen den Konen der Scheiben 5 und 51 sich bewegenden (nicht gezeigten) Kette übertragene Axialkomponente der Anpreßkraft abgefangen. Um nun den Abstand zwischen der Losscheibe 5 und der Festscheibe 51 zu verstellen, wird die Losscheibe 5 axial auf die Festscheibe 51 zu bewegt. Dies geschieht durch einen Axialstelltrieb AST, mit einem Hubelement 4, dem gegenüber die Losscheibe 5 drehbar angeordnet ist und das über ein zwischen Hubelement 4 und Losscheibe 5 befindliches Axiallager 9 die Axialkraft zur Verstellung der Losscheibe 5 überträgt. Wie aus Figur 1 und Figur 2 zu erkennen ist, ist die Losscheibe 5 einstückig mit einer Axialhülse 50 ausgebildet, die in ihrem Inneren in ein Keilwellenprofil 40 der Welle 1 eingreift und an ihrer Außenseite über ein Radiallager 7 das Hubelement 4 radial führt. Das mit drei Rampen 403 versehene Hubelement 4 wird über an den Rampen 403 anliegende Flügel 111 eines Flügelkäfigs 11, die wiederum Wälzkörper enthalten, von zu den Rampen 403 komplementären Rampen 203 eines Steuerelements 2 angesteuert, welches über ein Lager 8 radial am Außenumfang des Hubelements 4 geführt wird (siehe auch Figur 6 bzw. 6a). Ein derartiger Flügelkäfig ist beispielsweise in der noch nicht veröffentlichten deutschen Patent-anmeldung 199 42 462.4 der gleichen Anmelderin beschrieben. Das Steuerelement 2 stützt sich über ein Axiallager 10 an einem Gehäuse 3 ab. Das Gehäuse 3 ist über ein Radiallager 6 radial gegen ein hinteres außenzylindrisches Ende 201 des Steuerelements 2 gelagert. Das hintere Ende 201 des Steuerelements 2 enthält zur Welle 1 offene Ringspalte R1 und R2, die auf Stichbohrungen S1 bzw. S2 ausgerichtet sind, welche wiederum von Drucköl-Längsbohrungen A1 bzw. B1 mit Drucköl versorgt werden, um den hier beschriebenen Axialstelltrieb AST, wie im folgenden beschrieben werden wird, zu steuern.

Um das Verständnis des nun zu beschreibenden Axialstelltriebs zu erleichtern sei kurz auf die Arbeitsweise des in Fig. 1 dargestellten CVT-Getriebes eingegangen. Am linken Ende der Welle des oberen Variators V1 denke man sich einen Antriebsmotor, der die Welle in Drehung versetzt, um Leistung abzugeben. Diese Leistung soll auf die Welle 27 des unteren Variators V2 übertragen werden. Die Übertragung geschieht über einen hier nicht gezeigten Keilriemen oder eine entsprechende Kette die, abhängig vom Abstand der Fest- und Losscheiben 51 und 5 der Variatoren, einen variablen Umschlingungsradius hat.

Tatsächlich ist die in Figur 1 dargestellte Position der Kettenscheiben 51 und 5 von beiden Variatoren V1 und V2 keine Betriebsstellung, da beide Scheiben hier maximalen Abstand haben. In Wirklichkeit bewegen sich die Scheiben axial um eine Strecke H (Fig. 1) hin und her. Um nun die Konfiguration von Figur 1 zum Anfahren einzustellen, d.h. die niedrigste Übersetzung eines Drehmoments vom Variator V1 auf den Variator V2 bzw. von der Welle 1 auf die Welle 27, zu erreichen, muß man sich die Losscheibe 5 des Variators V2 um die Strecke H nach links verschoben vorstellen. In dieser Position hätte eine Übertragungskette beim Variator V1 (maximaler Abstand der Konusscheiben) die kleinste Umschlingung und zwischen den Scheiben 51 und 5 des Variators V2 auf Welle 27 die größte Umschlingung. Es handelte sich hier also dann um eine Untersetzung.

Zur Änderung des Übersetzungsverhältnisses in eine Übersetzung sind jeweils die Scheiben 5 bis maximal um die Strecke H auf die Scheiben 51 zuzubewegen bis im Extremfall die Umschlingungsradien genau umgekehrt liegen, wie zuvor beschrieben.

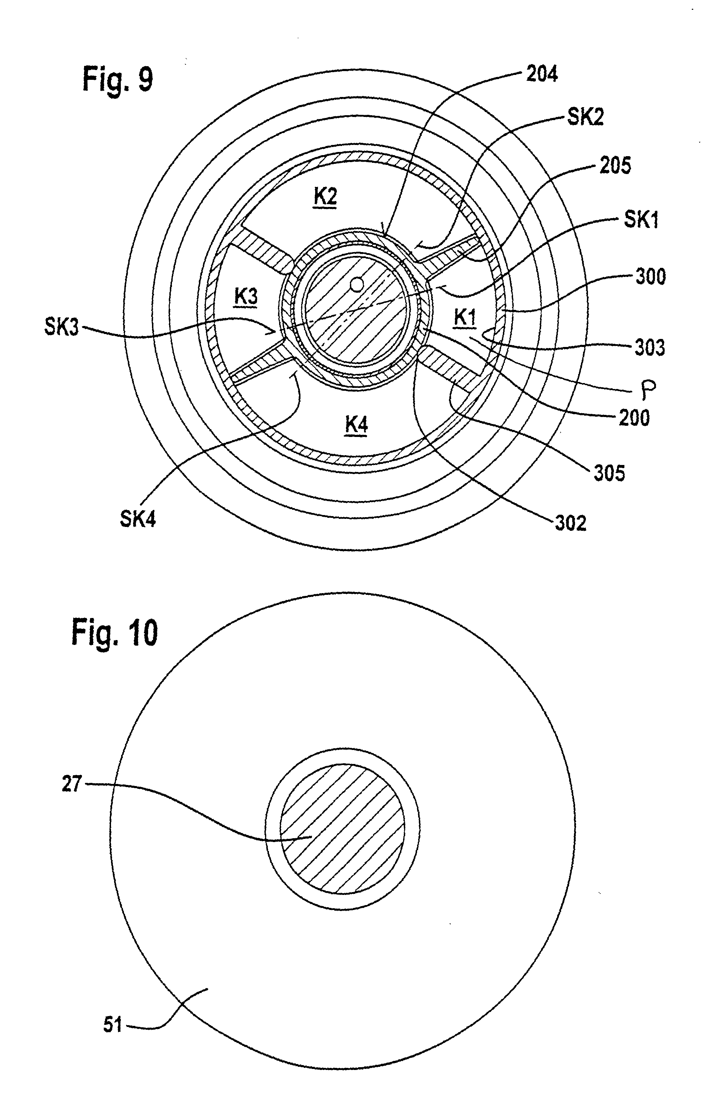

Zur Axialverschiebung einer Losscheibe 5 eines Radiators wird ein Axialstelltrieb AST wie folgt angesteuert (hierbei erleichtert eine statische Betrachtung der Vorrichtung, d.h. bei sich nicht drehend gedachter Welle 1 bzw. Welle 27, das Verständnis): Über eine Drucköl-Längsbohrung A1 wird Drucköl über eine Stichbohrung S2 in einen im hinteren Ende des Steuerelements 2 angeordneten, zur Welle 1 zeigenden, Ringspalt R1 gepumpt, der mit den Kammern K1 und K3 der Antriebseinrichtung P (siehe Figur 9) kommuniziert. Über eine Drucköl-Längsbohrung B1 wird in analoger Weise über eine Stichbohrung S2 ein Ringspalt R2 mit Drucköl versorgt, welcher mit den Kammern K2 und K4 kommuniziert. Die Kammern K1-K4 ergeben sich durch zwei axial ineinander geschobene konzentrische Gehäusehälften 300 und 200, wobei die äußere Gehäusehälfte 300 einen Boden 301 mit einer zentrischen runden Aussparung 302, eine sich vom Boden 301 axial zum Steuerelement 2 erstreckende zylindrische Wand 303 und zwei sich von der Wand 303 radial bis zur runden Aussparung 302 nach innen erstreckende Kammerwände 305 aufweist. Die innere Gehäusehälfte 200 enthält einen Deckelring 206 der sich im wesentlichen von der zylindrischen Wand 303 bis zur zentrischen runden Aussparung 302 radial nach innen erstreckt. Eine zylindrische Wand 204 des Steuerelements 2 erstreckt sich vom Deckelring 206 axial bis zur Aussparung 302. Von der zylindrischen Wand 204 der inneren Gehäusehälfte 200 erstrecken sich radial bis zur zylindrischen Wand 303 nach außen gerichtete, um 180° versetzte, Kammerwände 205, die mit der zylindrischen Wand 303 dicht abschließen. Von der zylindrischen Wand 303 der äußeren Gehäusehälfte 300 erstrecken sich zwei sich gegenüberliegende Kammerwände 305 bis hin zur zylindrischen Wand 204 der inneren Gehäusehälfte 200. Hierdurch ergeben sich (beim Variator V1) vier getrennte Kammern K1 bis K4, wobei das Kammernpaar K1 und K3 sowie das Kammernpaar K2 und K4 jeweils miteinander über Ringspalte R1 und R2 miteinander kommunizieren. Wird nun über die Druckölbohrung A1 Drucköl zugeführt, so wird zwangsläufig das Volumen der Kammer K 1 und der Kammer K3 vergrößert. Dies geschieht dadurch, daß durch den Druckanstieg in der Kammer K 1 und K3 eine Kraft auf die Kammerwände 205 ausgeübt wird, wodurch - das Drucköl stützt sich an den über das Gehäuse 3 getriebefest angeordneten Kammerwänden 305 ab - das Steuerelement 2 (in Figur 9 gesehen) gegen den Uhrzeigersinn gedreht wird. Die Kammerwände 205 dienen gleichsam als Turbinen- oder Pumpenflügel.

Ein Drehen des Steuerelements 2 gegenüber dem Gehäuse 3 - ausgelöst durch die eben beschriebene Druckölzuführung über die Bohrung A1 - verringert das Druckölvolumen in den Kammern K2 und K4, die über einen Ringspalt R2 und Stichbohrung S2 Öl durch die Drucköl-Längsbohrung B wieder abführen. Über die Druckölzu- und -abführung wird hier im Detail nicht gesprochen, da dies für den Fachmann üblichen Druckölsteuerungen entnommen werden kann.

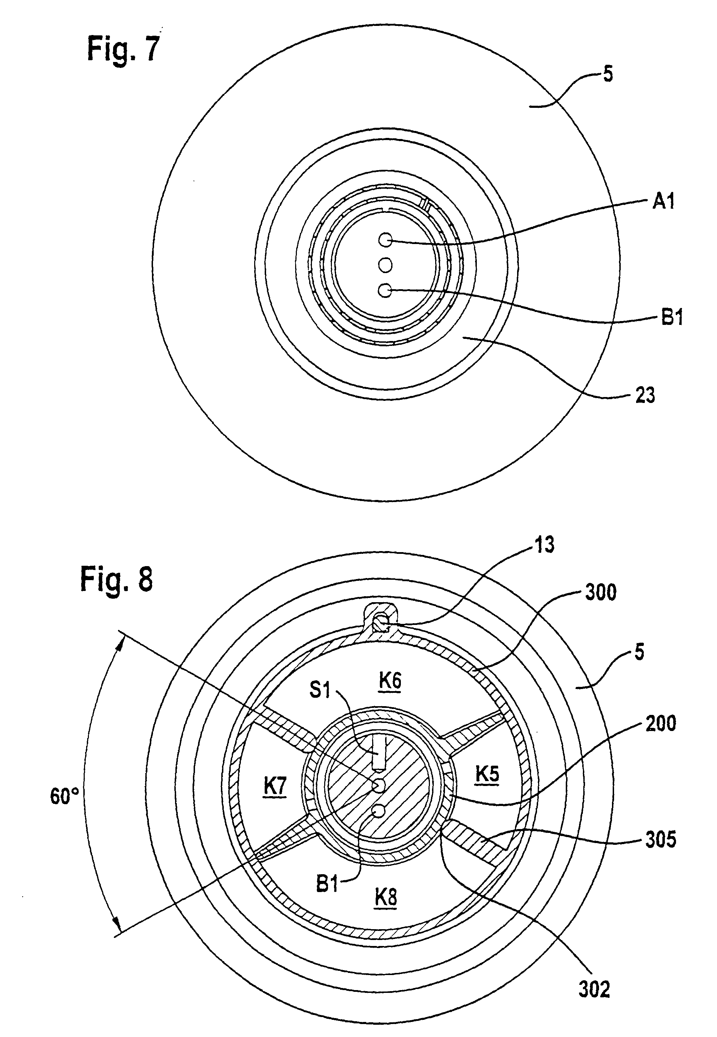

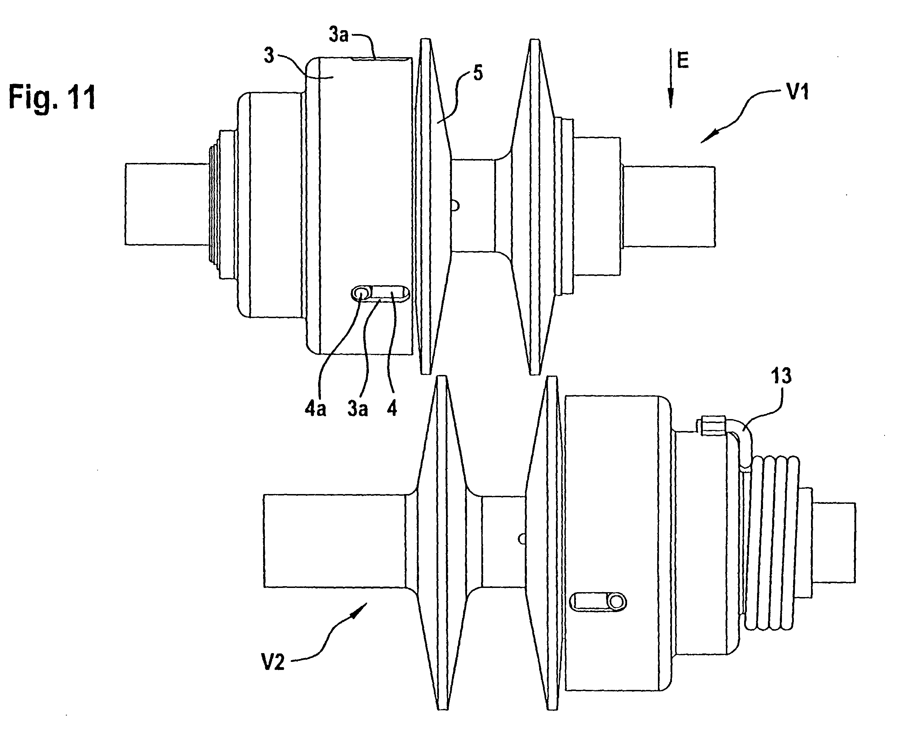

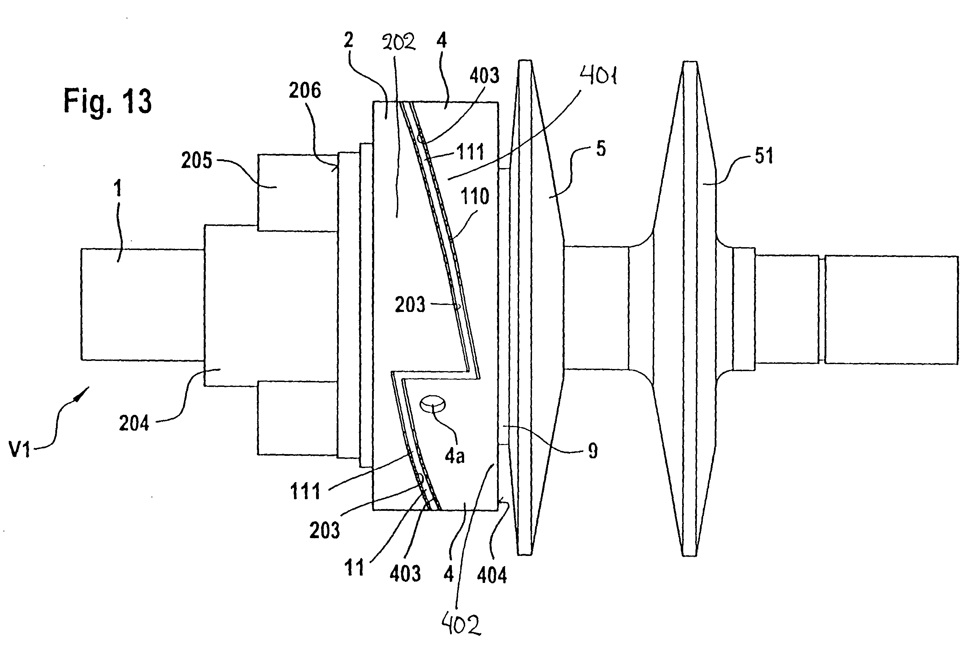

Das Hubelement 4 ist, wie in Figur 11 bzw. auch in Figur 2 skizziert ist, gegenüber dem Gehäuse 3 dreh-, jedoch nicht axialfest, fixiert. Beispielsweise über am Hubelement 4 am Umfang angebrachte Haltestifte 4a, die im Gehäuse 3 angebrachte Längsnuten 3a durchdringen, wird das Hubelement 4 gegenüber dem Gehäuse 3 drehfest gelagert. Eine Drehung des Steuerelements 2 um die Achse der Welle 1 bewirkt, daß auf dem Steuerelement 2 angeordnete zum Hubelement 4 hin ansteigende Rampen 203 das Hubelement, das sich ja nicht mit dem sich drehenden Steuerelement 2 mitdrehen kann, (in Figur 2) nach rechts ausweicht. Hierzu hat das Hubelement zum Steuerelement 2 zeigende, ebenfalls wendelförmig ansteigende, zu den Rampen 203 komplementäre Rampen 403. Damit die beiden Rampengruppen 203 und 403 nicht aufeinander in einer Gleitpaarung liegen, ist dazwischen ein Flügelkäfig 111 angeordnet, dessen hier drei, vorzugsweise Wälzkörper tragende, wendelförmige Flügel 111 damit ein wendelförmiges Axiallager ergeben. Wie aus den Figuren 9 und 8 entnehmbar ist, liegt der Verstellwinkel bei etwa 70°, um die Axialverstellung der Losscheibe 5 um die Strecke H zu erreichen. Hier sollen jedoch keine exakten Maße zueinander angegeben werden. Die individuelle Bemessung hängt von den individuellen Anforderungen ab. Um die etwas kompliziert zu beschreibende Form bzw. Lage der eben beschriebenen Teile zu erleichtern, wird in Figur 13 in schematischer Darstellung ein Teil der beschriebenen relevanten Bauteile noch einmal gezeigt, wobei hier das Gehäuse 3 mit seiner äußeren Gehäusehälfte 300 aus Übersichtsgründen nicht dargestellt wird. Dadurch ist die Form der inneren Gehäusehälfte 200 gut zu erkennen. Figur 13 kann man jedoch leicht entnehmen wie das Steuerelement 2 mit seinen Rampen 203 und das Hubelement 4 mit seinen wendelförmigen Rampen 403 zueinander positioniert sind. Der dazwischen liegende Flügelkäfig 11 mit ebenfalls wendelförmig gestalteten Flügeln 111 trägt beispielsweise Wälzkörper 110. Die Flügel 111 des Flügelkäfigs 11 sind über eine zylindrische Teilhülse 112 (Figur 2) am Umfang miteinander verbunden, wobei die zylindrische Hülse 112 ebenfalls (nicht gezeigte) Wälzkörper zur Radiallagerung des Flügelkäfigs 11 gegenüber dem Steuerelement 2 und/oder Hubelement 4 tragen kann.

Mit der eben beschriebenen erfindungsgemäßen Anordnung von Axialstelltrieben in Variatoren eines CVT-Getriebes läßt sich eine höchstwirtschaftliche Anordnung schaffen, wobei die sich durch die vorliegende Erfindung ergebenden Vorteile sehr umfangreich sind. Die Gestaltung erlaubt einen hohen Wirkungsgrad bei hoher Übersetzung und geringem Energiebedarf. Gegenüber bekannten CVT-Getrieben wird hier nur ein Zehntel bis ein Fünfzehntel des dort benötigten Energiebedarfs eingesetzt. Die Konstruktion der Antriebseinrichtung mit Druckkammern benötigt nur eine kleine Pumpe, die bei kleinem Öldruck mit geringer Ölmenge arbeitet, wobei der Variator keine rotierenden Teile aufweist. Eine schnelle Verstellzeit des Variators wird begünstigt, wenn aus dem Kammern K1 und K3 ausfließendes Öl sofort den Kammern K2 und K4 zugeführt wird.

Auf der in Figur 1 unten oder in Figur 3 dargestellten Welle 27 ist eine Schraubenfeder 13 dargestellt, die einerseits im Gehäuse 3 und andererseits im Steuerelement 2 befestigt ist, so daß die beiden Elemente Steuerelement 2 und Gehäuse 3 eine zwangsweise Vorspannung zueinander haben und damit die Kammern K1 bis K4 und auch die Position der Losscheibe 5 so verstellen, daß der Abstand zwischen Losscheibe 5 und Festscheibe 51 minimal wird, wenn auf der Seite der Öldruckversorgung der Betrieb abbricht, beispielsweise bei abgestorbenem Motor oder Stromausfall. Damit stellt sich automatisch bei hilfsweisem Weiterdrehen der Wellen 1 und 27 bzw. der gesamten Getriebeeinheit ein für ein Neuanfahren günstiges Übersetzungs- bzw. Untersetzungsverhältnis ein.

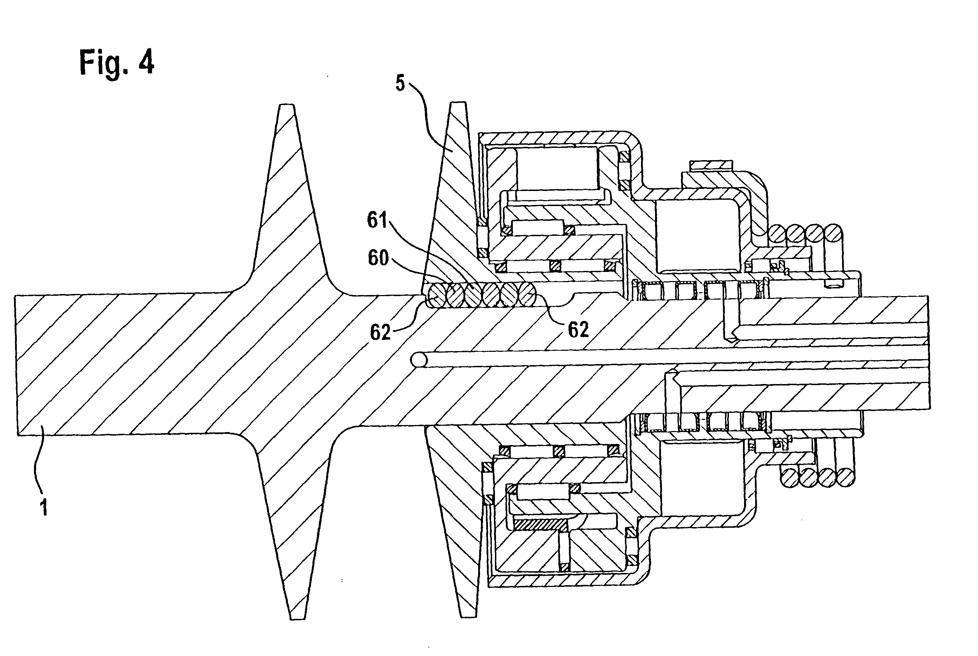

In den Figuren 4 und 6a ist eine besondere Form einer axial verschiebbaren aber drehfesten Lagerkopplung zwischen Losscheibe 5 und Welle 1 dargestellt. Es handelt sich hier um eine sogenannte Kreuzrollenlagerung 60. Hierbei werden in Längsumfang an der Welle und in der Variatorscheibe Nuten angeordent in denen Zylinderrollen 61 kreuzweise eingelegt sind. Damit wird eine symmetrische Momentenübertragung von der Losscheibe auf die nicht gezeigte Kette möglich.

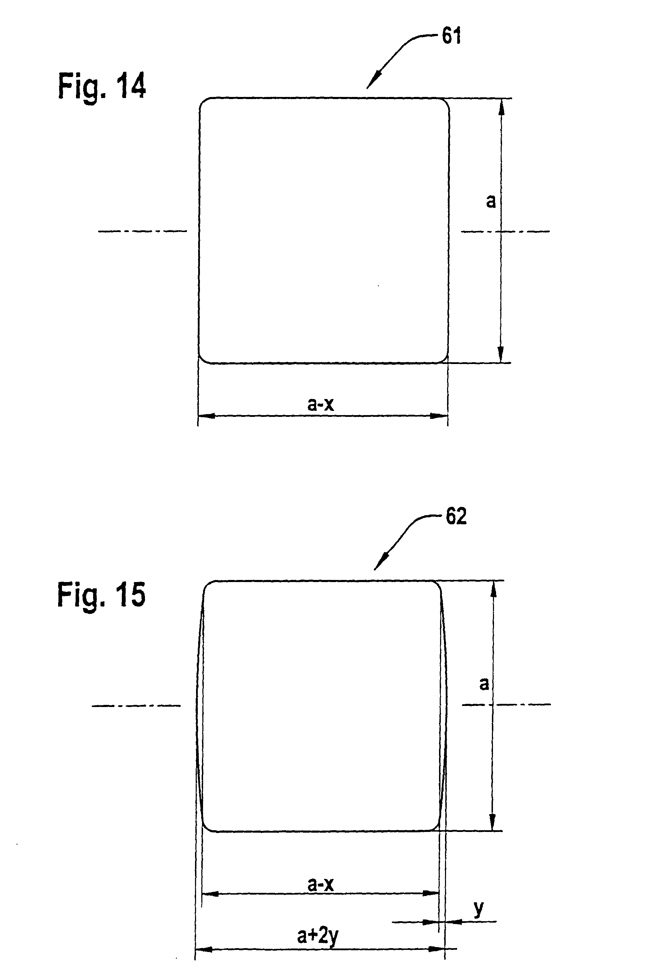

Figur 14 zeigt einen Wälzkörper 61, eine Zylinderrolle, die einen Durchmesser A und eine Höhe A-X hat. Damit ist der Durchmesser des Wälzkörpers 61 größer als seine Länge. Da die Wälzkörper 61 in Nuten axial abrollen und sich zwischen den Wälzkörpern 61 keine Zwischenstücke (Käfig u.dgl. befinden), müssen die Wälzkörper in ihren Endlagen bzw. in den momentanen Positionen fixiert werden. Dies ist vorteilhafterweise dann möglich, wenn alle oder wenigstens der erste und der letzte Wälzkörper 62 (siehe Figur 15) eine Höhe haben, die größer als der Durchmesser ist, beispielsweise eine Höhe A+2Y. Dies ist nicht aufwendig und kann schon allein durch einfache Beschichtung des Wälzkörpers 62 erreicht werden. Wird beispielsweise eine Kunststoffbeschichtung aufgebracht, erhält man dadurch ein Material, das weicher als der Wälzkörper selbst und damit elastisch ist und außerdem eine höhere Rauhheit als der Wälzkörper selbst aufweist. Im Einbauzustand wird der elastische Bereich zusammengedrückt. Befinden sich die Wälzkörper in einer beliebigen Position und wirken keine translatorischen Kräfte, werden diese über die beschichteten Stirnflächen in ihrer Position gehalten. Die Länge der Nuten und die Anzahl der Wälzkörper ist auf den jeweils erforderlichen Hub (Verschiebestrecke H für die Losscheibe 5) abgestimmt. Die Anzahl der Nuten (im gezeigten Beispiel 5) hängt von der angestrebten Qualität der axialen Führung und dem zu übertragenden Moment ab. Damit ergibt sich eine verblüffend einfache, aber sehr vorteilhafte Wellen-/Nabenverbindung, die sehr verschleißarm und sicher arbeitet.

Die in dieser Beschreibung erläuterten Ausführungsbeispiele schränken den Schutzumfang der vorliegenden Anmeldung nicht ein. Analoge Abänderungen gehören ebenfalls zum Gegenstand der vorliegenden Anmeldung.

### BEZUGSZEICHEN

- 1: Welle
- 2: Steuerelement
- 3: Gehäuse
- 3a: Längsnut
- 4: Hubelement
- 4a: Haltestift
- 5: Variatorscheibe (Losscheibe)
- 6: Lagerung
- 7: Lagerung
- 8: Lagerung
- 9: Lagerung
- 10: Lagerung
- 11: Flügelkäfig
- 13: Drehfeder
- 23: Lagerung
- 27: Welle
- 40: Keilwellen-/Nabenverzahnung
- 50: Axialhülse
- 51: Variatorscheibe (Festscheibe)
- 60: Kreuzrollenlagerung
- 61: Wälzkörper
- 62: Wälzkörper
- 111: Flügel
- 200: innere Gehäusehälfte
- 201: hinteres Ende Steuerelement 2
- 202: vorderes Ende Steuerelement 2
- 203: Rampe
- 204: zylindrische Wand
- 205: Kammerwand
- 206: Deckelring
- 300: äußere Gehäusehälfte
- 301: Boden
- 302: runde Aussparung
- 303: zylindrische Wand
- 305: Kammerwand
- 401: hinteres Ende Hubelement 4
- 402: vorderes Ende Hubelement 4
- 403: Rampe
- 404: Druckfläche

- AST: Axialstelltrieb
- A1,B1: Drucköl-Längsbohrungen
- C1, C2: Schmierbohrungen
- H: Höhe
- K1 - K4: Kammern
- K5 - K8: Kammern
- R1, R2: Ringspalte
- S1, S2: Stichbohrungen
- SK1, SK3: Stichbohrungen
- SK2, SK4: Stichbohrungen
- V1, V2: Variatoren

## Patentansprüche

1. Axialstelltrieb zur Umwandlung einer Drehbewegung in eine translatorische Bewegung, insbesondere für die Steuerung der Axialposition von Variatorscheiben eines stufenlosen Fahrzeuggetriebes, üblicherweise CVT-Getriebe genannt, der folgende Merkmale aufweist:
a) eine **Welle (1),**
b) ein gegenüber der Welle (1) axial festgelegtes, um die Wellenachse mittels einer **Antriebseinrichtung (P)** drehbares **Steuerelement (2)** mit einem hinteren Ende (201) und einem vorderen Ende (202),
c) mit einem gegenüber dem Steuerelement (2) drehbar gelagerten, gegenüber der Welle (1) drehfesten **Hubelement (4)** mit einem hinteren Ende (401) und einem vorderen Ende (402),
wobei am vorderen Ende (202) des Steuerelements (2) wenigstens drei konzentrische, zum hinteren Ende (401) des Hubelements (4) hin zeigende, wendelförmig ansteigende **Rampen (203)** und am hinteren Ende des Hubelements (4) wenigstens drei konzentrische, zum vorderen Ende (202) des Steuerelements (2) hin zeigende, wendelförmig ansteigende, zu den Rampen (203) komplementäre, **Rampen (403)** angeordnet sind,
wobei am vorderen Ende (402) des Hubelements (4) eine **Druckfläche (404)** zur Übertragung von Axialkräften angeordnet ist, **dadurch gekennzeichnet, daß**
zwischen dem Steuerelement (2) und dem Hubelement (4) ein vorzugsweise Wälzkörper tragende, wendelförmige Flügel (111) aufweisender **Flügelkäfig (11)** angeordnet ist, und
wobei die **Wendelform** der Flügel der Wendelform der Rampen (203) und (403) entspricht.

2. Axialstelltrieb nach Anspruch 1, **dadurch gekennzeichnet, daß** die Antriebseinrichtung (P) zwei axial ineinandergeschobene konzentrische **Gehäusehälften (300, 200)** aufweist,
- wobei die äußere Gehäusehälfte (300) einen Boden (301) mit einer zentrischen runden Aussparung (302), eine sich vom Boden (301) axial zum Steuerelement (2) erstreckende zylindrische Wand (303) und wenigstens zwei sich von der Wand (303) radial bis zur runden Aussparung (302) nach innen erstreckende **Kammerwände (305)** aufweist und
- wobei die innere Gehäusehälfte (200)
- einen **Deckelring (206),** der sich im wesentlichen von der zylindrischen Wand (303) bis zur zentrischen runden Aussparung (302) radial nach innen erstreckt,
- eine **zylindrische Wand (204),** die sich vom Deckelring (206) axial bis zur Aussparung (302) erstreckt und
- wenigstens zwei sich von der Wand (204) radial bis zur zylindrischen Wand (303) nach außen erstreckende, den Kammerwänden (305) der äußeren zylindrischen Wand (303) gegenüber **verdreht angeordnete Kammerwände (205)** aufweist,
- wobei die äußere Gehäusehälfte (300) Teil **eines Gehäuses (3)** ist, gegen welches sich das Steuerelement (2), an dessen hinterem Ende (201) die innere Gehäusehälfte (200) axial- und drehfest angeordnet ist, axial abstützt, wodurch sich im Gehäuse (3) zwischen den beiden axial ineinandergeschobenen konzentrischen Gehäusehälften (300, 200) vier jeweils durch die **Kammerwände (305, 205)** getrennte **Kammern (K1 bis K4)** ergeben.

3. Variator für ein CVT-Getriebe mit axial verstellbarer **Variatorscheibe (5),** mit einem Axialstelltrieb nach Anspruch 2, **dadurch gekennzeichnet,**
- **daß** sich die Variatorscheibe (5) am vorderen Ende (402) des Hubelements (4) an der Druckfläche (404) abstützt und auf der Welle axial verschieblich und drehfest gelagert ist,
- **daß** das Steuerelement (2) und das Gehäuse (3) gegenüber der Welle (1) axialfest gelagert sind,
- **daß** die Welle (1) mit wenigstens zwei **Drucköl-Längsbohrungen (A1, B1)** versehen ist, von denen aus sich im Bereich der Kammern (K1 - K4) jeweils eine **Stichbohrung (S1, S2)** radial nach außen erstreckt, so daß sie jeweils in einen **Ringspalt (R1, R2)** mündet, in den jeweils zwei von zwei Kammern (K1, K3 und K2, K4) ausgehende **Stichbohrungen (SK1, SK3 und SK2, SK4)** münden.

4. Variator nach Anspruch 3, **dadurch gekennzeichnet, daß** die Variatorscheibe (5) über eine **Keilwellenverzahnung (40)** mit der Welle (1) verbunden ist.

5. Variator nach Anspruch 3, **dadurch gekennzeichnet, daß** die Variatorscheibe (5) über eine **Kreuzrollenlagerung (60)** mit der Welle (1) verbunden ist.

6. Variator nach Anspruch 5, **dadurch gekennzeichnet, daß** die Kreuzrollenlagerung (60) Wälzkörper (61) aufweist, die einen **Durchmesser A** und eine **Höhe A-X** haben.

7. Variator nach Anspruch 6, **dadurch gekennzeichnet, daß** die Kreuzrollenlagerung (60) Wälzkörper (61) aufweist, wobei alle oder wenigstens **der erste und der letzte Wälz körper (62)** (siehe Figur 15) eine Höhe **haben,** die größer als der Durchmesser ist, beispielsweise **eine Höhe A+2Y.**

8. Variator nach Anspruch 7, **dadurch gekennzeichnet, daß** die Höhe A+2Y durch **stirnsei**tige Beschichtung der Wälzkörpers (62) erreicht wird.

9. CVT-Getriebe mit zwei zueinander komplementär angeordneten Variatoren (V1, V2) nach einem der Ansprüche 3 bis 8, mit jeweils einer auf der Welle (1) festangeordneten Variatorscheibe (51) und einer auf der Welle längsverschieblich angeordneten Variatorscheibe (5), **dadurch gekennzeichnet, daß** das Steuerelement (2) und das Gehäuse (3) des abtriebsseitig angeordneten Variators (V2) mittels einer **Drehfeder (13)** gegeneinander so vorgespannt sind, daß die Losscheibe (5) aufgrund der Federkraft gegen die Festscheibe (51) gedrückt wird.

## Claims

1. Axial actuator for converting a rotary motion into a translational motion, in particular for controlling the axial position of variator disks of an infinitely variable vehicle transmission, typically called cvt, having the following features:
a) a shaft (1),
b) a control element (2), which is fixed axially relative to the shaft (1), can be rotated about the axis of the shaft by means of a driving device (P) and has a rear end (201) and a front end (202),
c) a linear-motion element (4), which is mounted rotatably relative to the control element (2), is fixed in terms of rotation relative to the shaft (1) and has a rear end (401) and a front end (402),
at least three concentric, spirally or helically rising ramps (203) facing the rear end (401) of the linear-motion element (4) being arranged at the front end (202) of the control element (2), and at least three concentric ramps (403), which face the front end (202) of the control element (2), rise spirally or helically and are complementary to the ramps (203), being arranged at the rear end of the linear-motion element (4),
a pressure face (404) for transmitting axial forces being arranged at the front end, (402) of the linear-motion element (4), **characterized in that** a flanged cage (11), preferably carrying rolling-contact elements and having spiral (or helical) flanges (111), is arranged between the control element (2) and the linear-motion element (4), the spiral shape of the flanges corresponding to the spiral shape of the ramps (203) and (403).

2. Axial actuator according to claim 1, **characterized in that** the driving device (P) has two axially nested concentric housing halves (300, 200),
- the outer housing half (300) having an end (301) with a central round aperture (302), a cylindrical wall (303) extending axially from the end (301) to the control element (2) and at least two chamber walls (305) extending radially inward from the wall (303) to the round aperture (302), and
- the inner housing half (200)
- having a cover ring (206) which extends essentially radially inward from the cylindrical wall (303) to the central round aperture (302),
- a cylindrical wall (204) which extends axially from the cover ring (206) to the aperture (302) and
- at least two chamber walls (205) which extend radially outward from the wall (204) and are twisted relative to the chamber walls (305) of the outer cylindrical wall (303),
- the outer housing half (300) being part of a housing (3) against which the control element (2), on the rear end (201) of which the inner housing half (200) is arranged in an axially and rotationally fixed manner, is axially supported, reaulting in the formation of four chambers (K1 to K4), each separated by the chamber walls (305, 205), between the two axially nested concentric housing halves (300, 200).

3. Variator for a continuously variable transmission with an axially adjustable variator disk (5), having an axial actuator according to claim 2, **characterized**
- **in that** the variator disk (5) is supported at the front end (402) of the linear-motion element (4) on the pressure face (404) and is mounted in an axially displaceable and rotationally fixed manner on the shaft,
- **in that** the control element (2) and the housing (3) are mounted in an axially fixed manner relative to the shaft,
- **in that** the shaft (1) is provided with at least two longitudinal pressurized-oil holes (A1, B1), from which respective radial holes (S1, S2) extend radially outward in the region of the chambers (K1 - K4), thus ending in respective annular slots (R1, R2), in each of which two radial holes (SK1, SK3 and SK2, SK4) starting from two chambers (K1, K3 and K2, K4) end.

4. Variator according to claim 3, **characterized in that** the variator disk (5) is connected to the shaft (1) by splines (40) .

5. Variator according to claim 3, **characterized in that** the variator disk (5) is connected to the shaft (1) by a crossed-roller bearing arrangement (60).

6. Variator according to claim 5, **characterized in that** the crossed-roller bearing arrangement (60) has rolling-contact elements (61) with a diameter A and a height A-X.

7. Variator according to claim 6, **characterized in that** the crossed-roller bearing arrangement (60) has rolling-contact elements (61), all or at least the first and the last rolling-contact elements (62) (see Figure 15) having a height which is greater than the diameter, e.g. a height A+2Y.

8. Variator according to claim 7, **characterized in that** the height A+2Y is achieved by end-face coating of the rolling-contact elements (62).

9. Continuously variable transmission with two variators (V1, V2) arranged in a manner complementary to one another in accordance with claims 3 to 8, with in each case one variator disk (51) arranged in a fixed manner on the shaft (1) (fixed disk) and one variator disk (5) arranged in a longitudinally displaceable manner on the shaft (loose disk), **characterized in that** the control element (2) and the housing (3) of the variator (V2) arranged on the output side are preloaded in such a way relative to each other by means of a torsion spring (13) that the loose disk (5) is pressed against the fixed disk (51) owing to the spring force.

## Revendications

1. Réducteur de positionnement axial pour la transformation d'un mouvement rotatif en un mouvement translatoire, notamment pour la commande de la position axiale de disques de variateur d'une boîte de vitesses sans transition d'un véhicule, d'habitude appelée transmission à changement de vitesse continu CVC, présentant les caractéristiques suivantes :
a) un arbre (1),
b) un élément de commande (2) présentant une extrémité arrière (201) et une extrémité avant (202), dont la position axiale est déterminée par rapport à l'arbre (1) et qui peut être tourné autour de l'axe de l'arbre au moyen d'un dispositif d'entraînement (P),
c) présentant un élément de course (4) présentant une extrémité arrière (401) et une extrémité avant (402), logé de manière à pouvoir tourner par rapport à l'élément de commande (2) mais pas par rapport à l'arbre (1),
à l'extrémité avant (202) de l'élément de commande (2) au moins trois rampes (203) concentriques ascendantes en forme hélicoïdale et dirigées vers l'extrémité arrière (401) de l'élément de course (4) étant disposées et à l'extrémité arrière de l'élément de course (4) au moins trois rampes (403) concentriques ascendantes en forme hélicoïdale, complémentaires aux rampes (203) et dirigées vers l'extrémité avant (202) de l'élément de commande (2), à l'extrémité avant (402) de l'élément de course (4) une surface de pression (404) pour la transmission de forces axiales étant disposée, **caractérisé en ce qu'**entre l'élément de commande (2) et l'élément de course (4) est disposée une cage à ailettes (11) présentant des ailettes hélicoïdales (111) portant de préférence des éléments de roulement, la forme hélicoïdale des ailettes correspondant à la forme hélicoïdales des rampes (203) et (403).

2. Réducteur de positionnement selon la revendication 1, **caractérisé en ce que** le dispositif d'entraînement (P) présente deux moitiés de boîtier (300, 200) insérées axialement et de manière concentrique l'une dans l'autre,
- la moitié de boîtier extérieure (300) présentant un fond (301) avec une échancrure (302) centrée ronde, une paroi cylindrique (303) s'étendant à partir du fond (301) axialement vers l'élément de commande (2) et au moins deux parois de chambre (305) s'étendant radialement vers l'intérieur à partir de la paroi (303) jusqu'à l'échancrure ronde (302), et
- la moitié de boîtier intérieure (202)
- présentant un anneau de couvercle (206) qui s'étend radialement vers l'intérieur substantiellement à partir de la paroi cylindrique (303) jusqu'à l'échancrure ronde centrée (302),
- une paroi cylindrique (204) qui s'étend axialement à partir de l'anneau de couvercle (206) jusqu'à l'échancrure (302) et
- au moins deux parois de chambre (205) s'étendant radialement vers l'extérieur à partir de la paroi (204) jusqu'à la paroi cylindrique (303) et disposées décalées en rotation par rapport aux parois de chambre (305) de la paroi cylindrique extérieure (303),
- la moitié extérieure du boîtier (300) étant une partie d'un boîtier (3) contre lequel l'élément de commande (2), à l'extrémité arrière (201) duquel la moitié de boîtier intérieure (200) est disposée de manière ferme du point de vue axial et de la rotation, s'appuie axialement, par quoi résultent à l'intérieur du boîtier (3) entre les deux moitiés de boîtier (300, 200) insérées l'une dans l'autre concentriquement dans le sens axial, quatre chambres (K1 à K4) séparées par les parois de chambre (305, 205).

3. Variateur pour une boîte de vitesses à changement de vitesse continu comportant un disque de variateur (5) réglable dans le sens axial ainsi qu'un réducteur de positionnement axial selon la revendication 2, **caractérisé en ce**
- **que** le disque de variateur (5) s'appuie à l'extrémité avant (402) de l'élément de course (4) contre la surface de pression (404) et qu'il est logé sur l'arbre de manière à pouvoir être déplacé en sens axial mais à être fixe quant à la rotation,
- **que** l'élément de commande (2) et le boîtier (3) sont logés de manière fixe dans le sens axial par rapport à l'arbre (1),
- **que** l'arbre (1) est pourvu d'au moins deux alésages longitudinaux pour l'huile sous pression (A1, B1) à partir de chacun desquels s'étend radialement vers l'extérieur un perçage transversal (S1, S2) dans la zone des chambres (K1 à K1) de sorte à déboucher dans un interstice annulaire (R1, R2) dans lequel deux perçages transversaux (SK1, SK3 et SK2, SK4) partant de deux chambres (K1, K3 et K2, K4) débouchent.

4. Variateur selon la revendication 3, **caractérisé en ce que** le disque de variateur (5) est relié à l'arbre (1) par un engrenage à arbre cannelé (40).

5. Variateur selon la revendication 4, **caractérisé en ce que** le disque de variateur (5) est relié à l'arbre (1) par un roulement à rouleaux en croix (60).

6. Variateur selon la revendication 5, **caractérisé en ce que** le roulement à rouleaux en croix (60) présente des éléments de roulement (61) qui ont un diamètre A et une hauteur A-X.

7. Variateur selon la revendication 6, **caractérisé en ce que** le roulement à rouleaux en croix (60) présente des éléments de roulement (61), tous ou au moins le premier et le dernier élément de roulement (62) (voir figure 15) présentant une hauteur qui est plus grande que le diamètre, par exemple une hauteur A+2Y.

8. Variateur selon la revendication 7, **caractérisé en ce que** la hauteur A+2Y est obtenue par un enduit côté front des éléments de roulement (62).

9. Boîte de vitesses à changement de vitesse continu présentant deux variateurs (V1, V2) disposés de manière réciproquement complémentaire selon l'une quelconque des revendications 3 à 8, comportant chacun un disque de variateur (51) disposé de manière fixe sur l'arbre (1) et un disque (5) disposé de manière à pouvoir se déplacer en sens longitudinal sur l'arbre, **caractérisée en ce que** l'élément de commande (2) et le boîtier (3) du variateur (V2) disposé côté sortie sont précontraints réciproquement au moyen d'un ressort de torsion (13) de sorte que le disque mobile (5) est pressé contre le disque fixe (51) par la force du ressort.
